# EUROPÄISCHE PATENTANMELDUNG

(11) **EP 0 586 363 A1**
(43) Veröffentlichungstag der Anmeldung: **09.03.1994**
(21) Anmeldenummer: 93890152.7
(22) Anmeldetag: 04.08.1993
(51) Int. Cl.: G01N 21/53

(54) **Messeinrichtung zur Bestimmung der Trübung von Gasen**

(30) Priorität: 04.09.1992 DE 9211940 U
(71) Anmelder: AVL Gesellschaft für Verbrennungskraftmaschinen und Messtechnik mbH.Prof.Dr.Dr.h.c. Hans List, A-8020 Graz (AT)
(72) Erfinder: Wegerer, Michael, Dipl.-Ing. Dr., A-8044 Graz (AT); Raslag, Klaus, A-8063 Eggersdorf Nr. 358 (AT)
(74) Vertreter: Klein, Adam, Dipl.Ing.

(57) **Zusammenfassung**

Das Umschaltventil (4) einer Meßeinrichtung zur Bestimmung der Trübung durch Partikel im Abgas von Dieselmotoren weist zusätzlich zu einer eine Zuführleitung (5) zwischen Gaseinlaß (3) und Umschaltventil (4) mit einer vom Umschaltventil (4) zur Meßkammer (2) verlaufenden Verbindungsleitung (7) verbindenden Meßstellung und einer die Verbindungsleitung (7) mit einer vom Umschaltventil (4) zum Auslaßstutzen (8) führenden Auslaßleitung (9) verbindenden Kalibrierstellung auch eine die Zuführleitung (5) überhaupt absperrende Schließstellung auf, womit das Innere der Meßeinrichtung zuverlässig vor unzulässiger Aufheizung durch ein zu hohes Temperaturniveau aufweisendes Probengas geschützt ist.

## Beschreibung

Die Erfindung betrifft eine Meßeinrichtung zur Bestimmung der Trübung von Gasen, insbesonders der Trübung durch Partikel im Abgas von Dieselmotoren, mit einem Gehäuse beinhaltend eine Meßkammer, einen Gaseinlaß, ein Umschaltventil, eine den Gaseinlaß mit dem Umschaltventil verbindende Zuführleitung, eine vom Umschaltventil zur Meßkammer verlaufende Verbindungsleitung, einen Auslaßstutzen, eine vom Umschaltventil zum Auslaßstutzen führende Auslaßleitung, zumindest eine Spülluftzuleitung, je einen mit der Spülluftzuleitung verbundenen Spülraum zwischen der Meßkammer und einer Beleuchtungsanordnung einerseits und einer Detektoranordnung andererseits, und je einen den Spülraum mit dem Auslaßstutzen verbindenden Abströmkanal.

Derartige Einrichtungen bzw. die damit durchgeführten Meßverfahren arbeiten nach dem Beer-Lambert'schen Gesetz, wo durch die im Gas bzw. Abgas befindlichen Partikeln eine Abschwächung eines Lichtstrahles hervorgerufen wird. Die Größenordnung der Abschwächung wird als Maß für die Partikelbelastung des Gases herangezogen. Im speziellen Fall der Abgasmessung wird das Abgas zumeist durch den Staudruck des Motors über eine im Auspuffrohr befindliche Sonde mit anschließendem Sondenschlauch über ein Umschaltventil in eine Meßkammer geleitet. Das Umschaltventil ermöglicht es, das System auch bei laufendem Motor und eingeschobener Sonde zu kalibrieren.

Eine bekannte Einrichtung der eingangs genannten Art bezieht sich auf eine Metallmeßkammer, welche zur Vermeidung von Kondensation beheizt ist. Zusätzlich befinden sich in der Meßkammer Blendenringe, um Reflexionen des Lichtstrahles zu vermeiden und um den Einfluß von Partikelablagerung auf das Meßergebnis abzumindern. An den Enden der Meßkammer befinden sich die optischen Elemente in Form einer Lichtquelle bzw. Beleuchtungsanordnung und einer Detektoranordnung. Um diese vor Verschmutzung zu schützen, und um die optische Meßlänge konstant zu halten, wird entlang der optischen Elemente ein Spülluftvorhang durch Frischluft aufgebaut. Diese bekannten Einrichtungen sind auf fahrbaren Gerätewagen aufgebaut und dementsprechend schwer bzw. teuer in der Herstellung.

Ein besonderer Nachteil der bekannten Einrichtungen der genannten Art ist weiters in dem Umstand zu sehen, daß es bei erhöhten Probengastemperaturen zu Funktionsbeeinträchtigung bis Totalausfall kommen kann soferne nicht eher aufwendige Maßnahmen zur Vorkonditionierung des Probengases getroffen werden.

Aufgabe der Erfindung ist es, eine Meßeinrichtung der eingangs genannten Art so zu verbessern, daß die genannten Nachteile der bekannten Einrichtungen vermieden werden und daß insbesonders eine einfache und kostengünstige Herstellung mit nur wenigen Einzelteilen bei vereinfachter Montage und Wartung sowie eine einfache Beherrschung auch höherer Probengastemperaturen möglich wird.

Dies wird gemäß der Erfindung bei einer Meßeinrichtung der genannten Art dadurch erreicht, daß das Umschaltventil zusätzlich zu einer die Zuführleitung mit der Verbindungsleitung verbindenden Meßstellung und einer die Verbindungsleitung mit der Auslaßleitung verbindenden Kalibrierstellung auch eine die Zuführleitung überhaupt absperrende Schließstellung aufweist.

In weiterer, besonders bevorzugten Ausgestaltung der Erfindung ist vorgesehen, daß abgesehen von der Zuführleitung sämtliche Strömungswege unmittelbar von den aus thermoplastischem, wiederverwertbarem Kunststoff bestehenden Gehäuseschalen begrenzt sind.

Das Umschaltventil kann in weiterer Ausgestaltung der Erfindung als Drehschieber mit strömungsgünstig ausgeführtem Durchströmkanal ausgebildet sein, was einerseits Strömungsverluste in der Einrichtung niedrig hält und andererseits auch einer allzu großen Verschmutzung derselben durch Ablagerung von Gasbestandteilen bzw. Partikeln entgegenwirkt.

Nach einer weiteren bevorzugten Ausgestaltung der Erfindung ist schließlich noch vorgesehen, daß in der Zuführleitung ein Temperatursensor einer Steuerschaltung für das Umschaltventil angeordnet ist, die bei Überschreiten einer bestimmten Schalttemperatur das Umschaltventil in Schließstellung hält.

Ein wesentlicher Vorteil der beschriebenen Ausgestaltungen besteht in der Art und konstruktiven Ausbildung des Umschaltventiles. Dieses ermöglicht zusätzlich zu der Stellung Kalibrieren bei eingeschobener Sonde bzw. der Stellung Messen eine weitere Ventilstellung, bei der der gesamte Probengasfluß in der Meßeinrichtung unterbrochen ist. Diese Form der Absperrung bewirkt, daß die gesamte Einrichtung durch Unterbindung des Gasflusses erforderlichenfalls vor Übertemperatur geschützt wird. Die Steuerung des Umschaltventiles erfolgt z.B. über einen Getriebemotor. Die Absperrstellung wird durch einen Temperatursensor mit nachgeschalteter Steuerschaltung aktiviert. Durch den damit möglichen Einsatz von Kunststoff wird die Vorrichtung leichter und dadurch tragbar.

Zusätzlich ist durch die beschriebene konstruktive Ausbildung des Umschaltventils gewährleistet, daß sich im Umschaltventil keinerlei Partikeln oder sonstige feste oder flüssige Bestandteile ablagern. Andererseits wird der Strömungsvorgang, welcher speziell etwa bei der Abgasmessung bei der freien Beschleunigung eines Motors große Bedeutung hat, durch die Formgebung des Umschaltventils nicht beeinträchtigt.

Es bestünde allerdings auch die Möglichkeit, durch Weglassen des Umschaltventils und durch Einsetzen eines starren Rohrbogens die Einrichtung zu vereinfachen und kostengünstiger zu gestalten. Allerdings wäre in diesem Fall zumeist wiederum beispielsweise eine externe Abgastemperaturkonditionierung beziehungsweise eine eigene Übertemperatursicherung anzubringen.

Nach einer besonders bevorzugten weiteren Ausgestaltung der Erfindung ist vorgesehen, daß das Gehäuse aus zwei gleich ausgebildeten Hauptschalen, deren im Zusammenbau abgedichtete Teilungsebene durch die Achse der Meßkammer und die dazu parallele Drehachse des Umschaltventiles verläuft, und zwei an die seitlich offenen Hauptschalen an zu deren Teilungsebene parallelen Trennebenen abgedichtet anschließenden, gleich ausgebildeten Deckelschalen besteht, die jeweils um eine senkrecht zur Achse der Mepkammer und senkrecht zur Drehachse des Umschaltventils verlaufende gedachte Achse zusammengeklappt sind und an denen seitlich je ein die Beleuchtungsanordnung einerseits und die Detektoranordnung andererseits aufweisender, abnehmbarer Deckel angebracht ist.

Der große Vorteil dieser Ausgestaltung liegt im praktisch vollkommen symmetrischen Aufbau der gesamten Einrichtung. Durch die spezielle Formgebung sind das Gehäuse sowie auch die wesentlichen abgas- und frischluftführenden Kammern bzw. Rohre der gesamten Einrichtung aus nur zwei unterschiedlichen Halbschalenelementen - nämlich den Hauptschalen einerseits und den Deckelschalen andererseits - ausgebildet. Diese werden wie beschrieben gegeneinander verdreht miteinander verbunden, z.B. verschraubt.

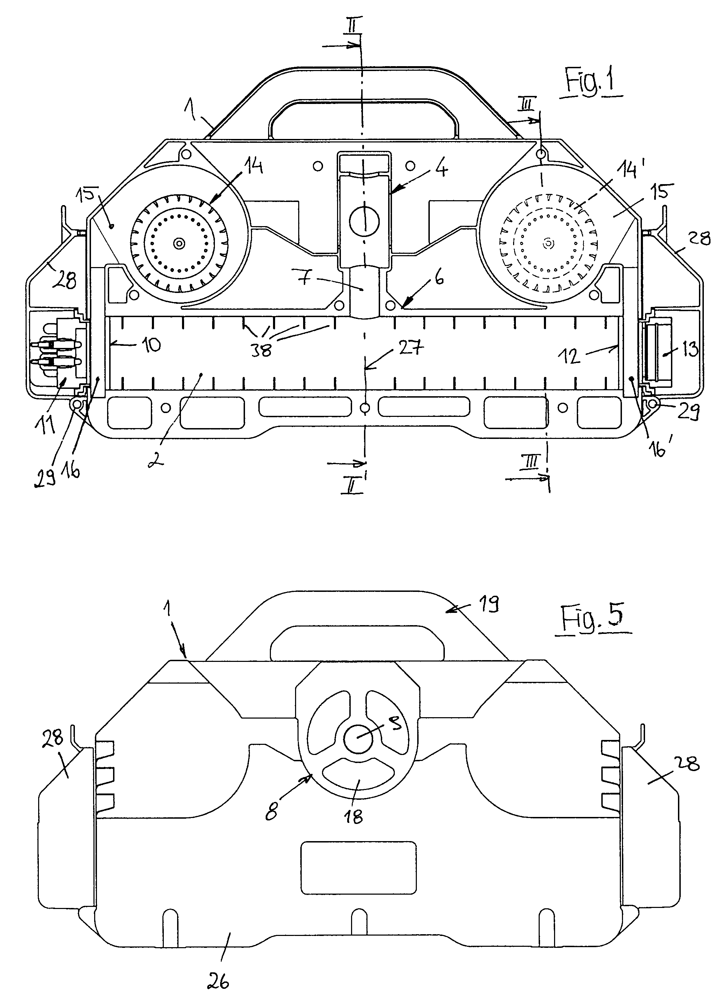

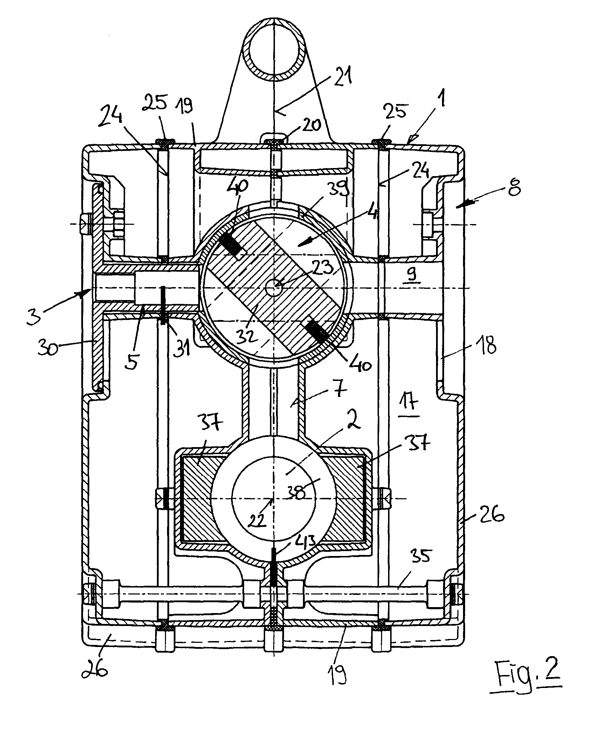

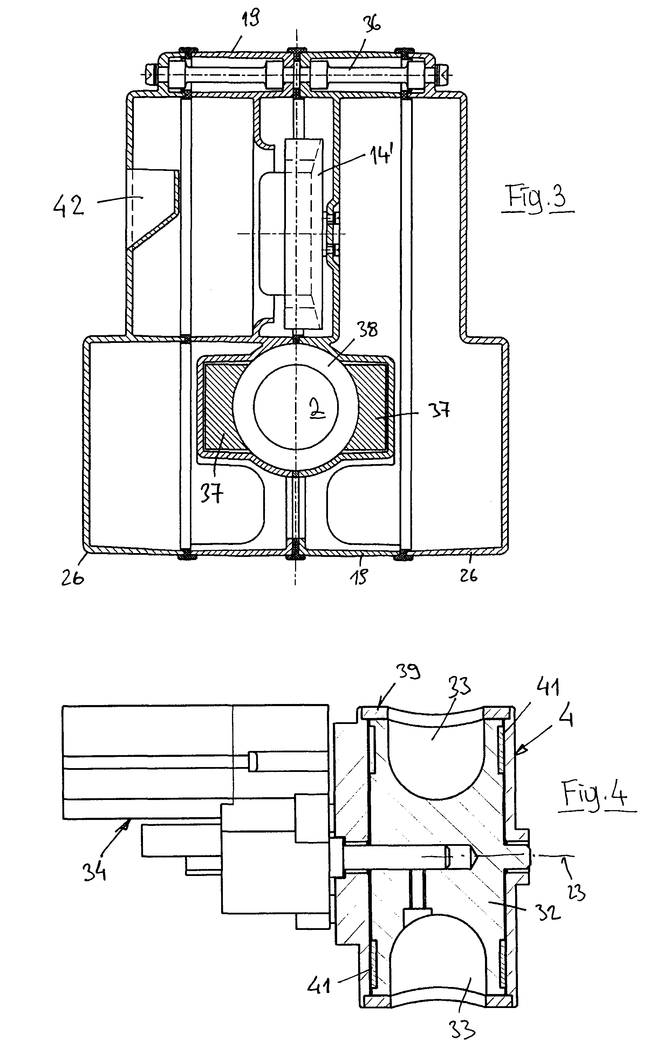

Die Erfindung wird im folgenden noch anhand des in der Zeichnung dargestellten Ausführungsbeispieles näher erläutert. Fig. 1 zeigt dabei einen Längsschnitt durch eine erfindungsgemäp ausgebildete Meßeinrichtung zur Bestimmung der Trübung durch Partikel im Abgas von Dieselmotoren, Fig. 2 zeigt einen Querschnitt entlang der Linie II-II in Fig. 1 in vergrößertem Maßstab, Fig. 3 zeigt einen Querschnitt entlang der Linie III-III in Fig. 1 wiederum in vergrößertem Maßstab, Fig. 4 zeigt einen vergrößerten Detailschnitt durch das beispielsweise in Fig. 2 ersichtliche Umschaltventil und Fig. 5 zeigt eine Außenansicht der Meßeinrichtung.

Die dargestellte Mepeinrichtung weist ein Gehäuse 1 auf, welches vorzugsweise aus thermoplatischem, wiederverwertbarem Kunststoff besteht und im wesentlichen folgendes beinhaltet: eine rohrförmige Meßkammer 2, einen Gaseinlaß 3, ein Umschaltventil 4, eine den Gaseinlaß 3 mit dem Umschaltventil 4 verbindende Zuführleitung 5, eine vom Umschaltventil 4 zu einem mittleren Umfangsbereich 6 der Meßkammer 2 verlaufende Verbindungsleitung 7, einen Auslaßstutzen 8, eine vom Umschaltventil 4 zum Auslaßstutzen 8 führende Auslaßleitung 9, eine im Abstand von einem der offenen Enden 10 der Meßkammer 2 angeordnete Beleuchtungsanordnung 11, eine im Abstand vom anderen offenen Ende 12 der Meßkammer 2 angeordnete Detektoranordnung 13, zwei über eine Spülluftzuleitung Außenluft ansaugende Gebläse 14, 14', je einen mit der Abströmseite 15 des Gebläses 14, 14' verbundenen Spülraum 16, 16' zwischen den offenen Enden 10, 12 der Meßkammer 2 und der Beleuchtungsanordnung 11 einerseits und der Detektoranordnung 13 andererseits, und je einen den Spülraum 16, 16' mit dem Auslaßstutzen 8 verbindenden, im Gehäuse 1 ausgebildeten Abströmkanal 17, der über eine Öffnung 18 am Auslaßstutzen 8 ins Freie mündet.

Das Gehäuse 1 besteht im wesentlichen aus zwei gleich ausgebildeten Hauptschalen 19, deren im Zusammenbau mittels einer eingelegten Dichtung 20 abgedichtete Teilungsebene 21 durch die Achse 22 der Meßkammer 2 und die dazu parallele Drehachse 23 des Umschaltventils 4 verläuft, sowie aus zwei an die seitlich offenen Hauptschalen 19 an zu deren Teilungsebene 21 parallelen Trennebenen 24 mittels Dichtungen 25 abgedichtet anschließenden, wiederum zueinander gleich ausgebildeten Deckelschalen 26. Die Hauptschalen 19 und die Deckelschalen 26 sind jeweils um eine senkrecht zur Achse 22 der Meßkammer 2 und senkrecht zur Drehachse 23 des Umschaltventils 4 verlaufende gedachte Achse 27 (entspricht der Schnittlinie II-II in Fig. 1) zusammengeklappt, womit also unter Verwendung von nur zwei gleichen Hauptschalen 19 und zwei gleichen Deckelschalen 26 das dargestellte Gehäuse 1 realisiert ist. Seitlich (in der Darstellung nach Fig. 1 und 5) ist je ein die Beleuchtungsanordnung 11 einerseits und die Detektoranordnung 13 andererseits aufweisender, abnehmbarer Deckel 28 angebracht, der um Scharniere 29 aufgeklappt werden kann und einen einfachen Zugang zur Reinigung der Fenster der Beleuchtungsanordnung 11 und der Detektoranordnung 13 sowie auch der Meßkammer 2 ermöglicht.

Das Umschaltventil 4 weist - wie insbesonders in Fig. 2 ersichtlich ist - zusätzlich zu einer die Zuführleitung 5 mit der Verbindungsleitung 7 verbindenden Mepstellung (ausgezogen dargestellt) und einer die Verbindungsleitung 7 mit der Auslaßleitung 9 verbindenden Kalibrierstellung (strichliert dargestellt) auch eine die Zuführleitung 5 überhaupt absperrende Schließstellung (waagrecht strichpunktiert eingezeichnet) auf, in der die Strömungswege innerhalb des Gehäuses 1, die unmittelbar von den wie erwähnt vorzugsweise aus thermoplastischem, wiederverwertbarem Kunststoff bestehenden Gehäuseschalen 19, 26 begrenzt sind, abgesperrt sind.

In der hier einen hitzebeständigen Einsatz 30 - beispielsweise aus Aluminium - aufweisenden Zuführleitung 5 ist ein Temperatursensor 31 einer nicht weiter dargestellten Steuerschaltung für das Umschaltventil 4 angeordnet, womit dieses bei Überschreiten einer bestimmten einlaßseitigen Gastemperatur in Schließstellung gehalten werden kann, sodaß die Strömungswege im Gehäuseinneren vor Beschädigung geschützt sind.

Das Umschaltventil 4 selbst ist nach Art eines Drehschiebers mit einem Ventilflügel 32 mit strömungsgünstig ausgeführtem Durchströmkanal 33 ausgebildet (siehe auch Fig. 4) und wird von der nicht dargestellten Steuerschaltung über einen Getriebemotor 34 betätigt.

Aus den Fig. 2 und 3 sind auch die Distanzbolzen 35, 36 ersichtlich, mittels der die Gehäuseschalen 19, 26 zusammengeschraubt sind. Die Dichtungen 20, 25 sind dabei so ausgebildet, daß sie sowohl eine Abdichtung des Gehäuseinnenraumes nach außen, als auch die gesamte Dichtfunktion innerhalb des Gerätes bewerkstelligen. Beim Zusammenbau ergibt sich alleine durch Einlegen des gesamten Umschaltventils 4, der Gebläse 14, 14', der Meßkammerheizelemente 37 und der Streublenden 38 in die beiden auf beschriebene Weise zusammengelegten identisch ausgebildeten Hauptschalen 19 der grundlegende Aufbau der Mepeinrichtung. Durch Aufschrauben der beiden Deckelschalen 26 auf die Distanzbolzen 35, 36 und Klemmen der Dichtungen 20, 25 erfolgt die Komplettierung der Mepeinrichtung. Die beiden symmetrischen Deckelschalen 26 bilden dabei durch ihre Formgebung den Abschluß des gesamten Gehäuses 1. Die Unterscheidung zwischen Gaseinlaß 3 und Auslaßstutzen 8 wird in den beiden Deckelschalen 26 nur durch Anbringung des Einsatzes 30 auf der Gaseinlaßseite erzielt.

Sämtliche Kanäle und Strömungsführungen sind für hohe Gasmengen ausgebildet. Durch unterschiedliche Ausbildung des Einsatzes 30 besteht dabei die Möglichkeit, die Meßeinrichtung sowohl auf kleinvolumige Fahrzeuge mit entsprechenden Sondendurchmessern als auch auf großvolumige Fahrzeuge mit höherem Gasdurchsatz abzustimmen.

Das Umschaltventil 4 besteht in der dargestellten Ausführung im wesentlichen aus einem zylindrischen Ventilkörper 39, in dem der beschriebene Ventilflügel 32 umläuft. Die Abdichtung erfolgt in radialer Richtung durch in den Ventilflügel 32 eingelegte Dichtleisten 40, in axialer Richtung durch beidseitig angebrachte, dichtende und reibungsvermindernde Anlaufscheiben 41. Die beiden Dichtleisten 40 werden auf hier nicht dargestellte Weise durch Federelemente radial nach außen gedrückt. Zufolge der bei der Umschaltung erfolgenden Drehbewegung des Ventilflügels 32 wird in Verbindung mit der beschriebenen Formgebung einer Ablagerung von Partikeln bzw. anderer Gasinhalte wirkungsvoll begegnet. Der in Fig. 4 angedeutete Getriebemotor 34 kann in vorteilhafter Weise auch eine integrierte Potentiometer-Positionssteuerung aufweisen, was den Gesamtaufbau vereinfacht.

Während des Kalibriervorganges (strichlierte Stellung des Ventilflügels 32 des Umschaltventils 4 in Fig. 2) drücken die beiden Gebläse 14, 14' über die beiden offenen Enden 10, 12 Frischluft in die Meßkammer 2, womit diese von der vorherigen Gasprobe freigespült wird. Spülluft und Abgase verlassen die Meßeinrichtung bzw. den Innenraum des Gehäuses 1 über die Verbindungsleitung 7, das Umschaltventil 4 und die Auslapleitung 9 bzw. auch die Öffnung 18. Durch den in allen Fällen zentralen Abgasaustritt am Auslaßstutzen 8 wird eine Entsorgung der Abgase mittels einer nicht dargestellten Absaugvorrichtung ermöglicht. Die Frischluftzuführung zu den Gebläsen 14, 14' erfolgt über den in Fig. 3 ersichtlichen Frischlufteinlaß 42.

Die in Fig. 2 durchgehend eingezeichnete Meßstellung des Umschaltventils 4 wird während des eigentlichen Meßvorgangs angefahren. Hierbei tritt das Abgas über den Gageinlaß 3 durch das Umschaltventil 4 und die Verbindungsleitung 7 in die Meßkammer 2 in deren mittlerem Umfangsbereich 6 ein. Während des Meßvorganges, bei dem die Abgastrübung zwischen Beleuchtungsanordnung 11 und Detektoranordnung 13 bestimmt wird, wird die Abgastemperatur am Geräteeintritt bzw. Gaseinlaß 3 mittels des Temperatursensors 31 erfaßt. Sollte die Abgastemperatur einen bestimmten zulässigen Höchstwert überschreiten, so wird der Ventilflügel 32 in die in Fig. 2 waagrecht strichpunktiert eingezeichnete Schließstellung gefahren, wobei der Ventilflügel 32 den Gaseinlaß 3 vollkommen abdichtet, sodap jeglicher Strömungsvorgang unterbrochen wird. Dies stellt einen zuverlässigen Schutz der gesamten Meßeinrichtung gegenüber thermischer Überbelastung dar. Die Meßeinrichtung ist je nach Art des verwendeten Gehäusewerkstoffs beispielsweise auf eine Dauertemperaturbelastung von 230°C ausgelegt.

Zur Vereinfachung der gesamten Meßeinrichtung könnte gegebenenfalls das Umschaltventil 4 auch durch einen hier nicht dargestellten starren Rohrbogen ersetzt werden, der den Gaseinlaß 3 unmittelbar mit der Verbindungsleitung 7 verbindet. In diesem Fall wäre während des Kalibriervorganges die Abgassammelsonde aus dem Auspuff eines zu prüfenden Motors zu entfernen, damit die Gebläse 14, 14' die Meßkammer 2 auf diesem Wege freispülen können. Um die Meßeinrichtung vor Übertemperatur zu schützen, müßte für diesen Fall eine externe Probengaskonditionierung oder eine externe Übertemperatursicherung vorgesehen werden.

Die Meßkammerheizelemente 37 bestehen im wesentlichen aus rechteckigen Metallelementen, in die die Heizstäbe mit temperaturabhängigen Widerständen eingegossen werden. Durch die Anordnung der Heizelemente 37 wird ein günstiger Wärmeübergang zwischen diesen und dem Inneren der Meßkammer 2 erreicht. Die Masse der Heizelemente 37 ermöglicht zusätzlich eine Wärmespeicherung, welche vor allem bei plötzlichen Abgasdurchflußänderungen einen positiven Einfluß auf das Meßergebnis hat. Die Streublenden 38 sind beispielsweise direkt auf den Heizelementen 37 aufgeschraubt und verhindern wirkungsvoll Reflexionen bzw. Streulicht in der Meßkammer 2. Der in Fig. 2 unten dargestellte Temperatursensor 43 erfaßt die Temperatur des in der Meßkammer 2 befindlichen Gases und regelt damit den Heizvorgang über die beiden Heizelemente 37.

## Patentansprüche

1. Meßeinrichtung zur Bestimmung der Trübung von Gasen, insbesonders der Trübung durch Partikel im Abgas von Dieselmotoren, mit einem Gehäuse (1) beinhaltend
- eine Meßkammer (2),
- einen Gaseinlaß (3),
- ein Umschaltventil (4),
- eine den Gaseinlaß (3) mit dem Umschaltventil (4) verbindende Zuführleitung (5),
- eine vom Umschaltventil (4) zur Meßkammer (2) verlaufende Verbindungsleitung (7),
- einen Auslaßstutzen (8),
- eine vom Umschaltventil (4) zum Auslapstutzen (8) führende Auslaßleitung (9),
- zumindest eine Spülluftzuleitung,
- je einen mit der Spülluftzuleitung verbundenen Spülraum (16, 16') zwischen der Meßkammer (2) und einer Beleuchtungsanordnung (11) einerseits und einer Detektoranordnung (13) andererseits, und
- je einen den Spülraum (16, 16') mit dem Auslaßstutzen (8) verbindenden Abströmkanal (17),
**dadurch gekennzeichnet**, daß das Umschaltventil (4) zusätzlich zu einer die Zuführleitung (5) mit der Verbindungsleitung (7) verbindenden Mepstellung und eine die Verbindungsleitung (7) mit der Auslaßleitung (9) verbindenden Kalibrierstellung auch eine die Zuführleitung (5) überhaupt absperrende Schließstellung aufweist.

2. Meßeinrichtung nach Anspruch 1, dadurch gekennzeichnet, daß abgesehen von der Zuführleitung sämtliche Strömungswege unmittelbar von den aus thermoplastischem, wiederverwertbarem Kunststoff bestehenden Gehäuseschalen (19, 26) begrenzt sind.

3. Meßeinrichtung nach Anspruch 1 oder 2, dadurch gekennzeichnet, daß das Umschaltventil (4) als Drehschieber mit strömungsgünstig ausgeführtem Durchströmkanal (33) ausgebildet ist.

4. Meßeinrichtung nach einem der Ansprüche 1 bis 3, dadurch gekennzeichnet, daß in der Zuführleitung (5) ein Temperatursensor (31) einer Steuerschaltung für das Umschaltventil (4) angeordnet ist, die bei Überschreiten einer bestimmten Schalttemperatur das Umschaltventil (4) in Schließstellung hält.

5. Meßeinrichtung nach einem der Ansprüche 1 bis 4, dadurch gekennzeichnet, daß das Gehäuse (1) aus zwei gleich ausgebildeten Hauptschalen (19), deren im Zusammenbau abgedichtete Teilungsebene (21) durch die Achse (22) der Meßkammer (2) und die dazu parallele Drehachse (23) des Umschaltventiles (4) verläuft, und zwei an die seitlich offenen Hauptschalen (19) an zu deren Teilungsebene (21) parallelen Trennebenen (24) abgedichtet anschließenden, gleich ausgebildeten Deckelschalen (26) besteht, die jeweils um eine senkrecht zur Achse (22) der Meßkammer (2) und senkrecht zur Drehachse (23) des Umschaltventils (4) verlaufende gedachte Achse (27) zusammengeklappt sind und an denen seitlich je ein die Beleuchtungsanordnung (11) einerseits und die Detektoranordnung (13) andererseits aufweisender, abnehmbarer Deckel (28) angebracht ist.
